# EUROPÄISCHE PATENTSCHRIFT

(11) **EP 0 824 190 B1**
(45) Veröffentlichungstag und Bekanntmachung des Hinweises auf die Patenterteilung: **06.03.2002**
(21) Anmeldenummer: 97119131.7
(22) Anmeldetag: 04.12.1993
(51) Int. Cl.: F02M 47/02

(54) **Brennstoffeinspritzventil**
Fuel injection valve
Soupape d'injection de combustible

(30) Priorität: 23.12.1992 CH 391492
(43) Veröffentlichungstag der Anmeldung: 18.02.1998
(62) Teilanmeldung aus: 93119577.0
(73) Patentinhaber: GANSER-HYDROMAG AG, 8001 Zürich (CH)
(72) Erfinder: Ganser, Marco A., 8001 Zürich (CH)
(74) Vertreter: Patentanwälte Schaad, Balass, Menzl & Partner AG

(56) Entgegenhaltungen:
- EP-A- 0 228 578
- EP-A- 0 262 539
- EP-A- 0 333 096
- EP-A- 0 333 097

## Beschreibung

Die Erfindung betrifft ein Brennstoffeinspritzventil zur intermittierenden Brennstoffzufuhr in den Brennraum einer Verbrennungskraftmaschine gemäss dem Oberbegriff des Anspruches 1.

Brennstoffeinspritzventile dieser Art sind in der EP-A-0 333 096 und EP-A-0 333 097 offenbart. Zum Verschliessen einer Ventilsitz-Einspritzöffnung ist ein in einem Gehäuse dieses Brennstoffeinspritzventils in dessen Axialrichtung verschiebbar eingebautes und mit dem Ventilsitz zusammenwirkendes, längliches Einspritzventilglied vorhanden. Das Einspritzventilglied ist vorübergehend in axialer Richtung weg vom Ventilsitz bewegbar, um die Einspritzöffnung zu öffnen. In einer gehäusefesten Platte ist ein Steuerraum vorgesehen, der einerseits mit einer den unter Druck stehenden Brennstoff beinhaltenden Hochdruckzone verbunden ist, und der anderseits über eine mittels eines elektromagnetisch betätigbaren Pilotventils verschliessbare Steueröffnung vorübergehend mit einer Niederdruckzone verbindbar ist. Der Brennstoffdruck im Steuerraum drückt das Einspritzventilglied an den Ventilsitz an. Durch Betätigung des Pilotventils wird der Druck im Steuerraum rasch abgesenkt und rasch wieder aufgebaut, um die axiale Öffnungs- und Schliessbewegung des Einspritzventilgliedes zuzulassen. Im Einspritzventilglied ist an seinem oberen Ende ein Drosselkörper eingesetzt, der eine in den Steuerraum mündende Drosselbohrung aufweist. Die Verbindung des Steuerraumes mit der Hochdruckzone erfolgt über diese Drosselbohrung, eine an diese angeschlossene, im Durchmesser erweiterte Längsbohrung im Einspritzventilglied und einen in die Längsbohrung mündenden radialen Zulauf, dessen Durchmesser kleiner ist, als der Durchmesser der Längsbohrung.

Der vorliegenden Erfindung liegt die Aufgabe zugrunde, ein herstellungstechnisch einfacheres Brennstoffeinspritzventil zu schaffen.

Diese Aufgabe wird erfindungsgemäss durch ein Brennstoffeinspritzventil mit den Merkmalen des Anspruches 1 gelöst.

Vorteile der Erfindung werden anhand der nachfolgenden, detaillierten Beschreibung unterschiedlicher Ausführungsvarianten erläutert, welche in den Figuren gezeigt werden.

### Kurze Beschreibung der Zeichnungen

- Figur 1: ist eine axiale Schnittzeichnung eines elektromagnetisch gesteuerten Brennstoffeinspritzventils gemäss der vorliegenden Erfindung;
- Figur 2: ist ein vergrösserter, partieller Ausschnitt von Figur 1, der die spezifischen Merkmale zur Realisation des gewünschten Hubverlaufes detailliert zeigt;
- Figur 3: ist eine axiale Schnittzeichnung einer zweiten Ausführungsvariante eines Brennstoffeinspritzventils gemäss der vorliegenden Erfindung
- Figur 3a: ist eine vergrösserte Ansicht von oben eines Hubanschlagelementes des Brennstoffeinspritzventils von Figur 3
- Figur 3b: ist eine Schnittzeichnung des Hubanschlagelementes entlang der Linie A-A von Figur 3a, und
- Figur 4: ist ein Diagramm, das zeigt, wie die Hubverläufe der Brennstoffeinspritzventile der vorliegenden Erfindung bei relativ niedrigem bis mittlerem sowie bei hohem Einspritzdruck verlaufen.

### Detaillierte Beschreibung der Ausführungsvarianten

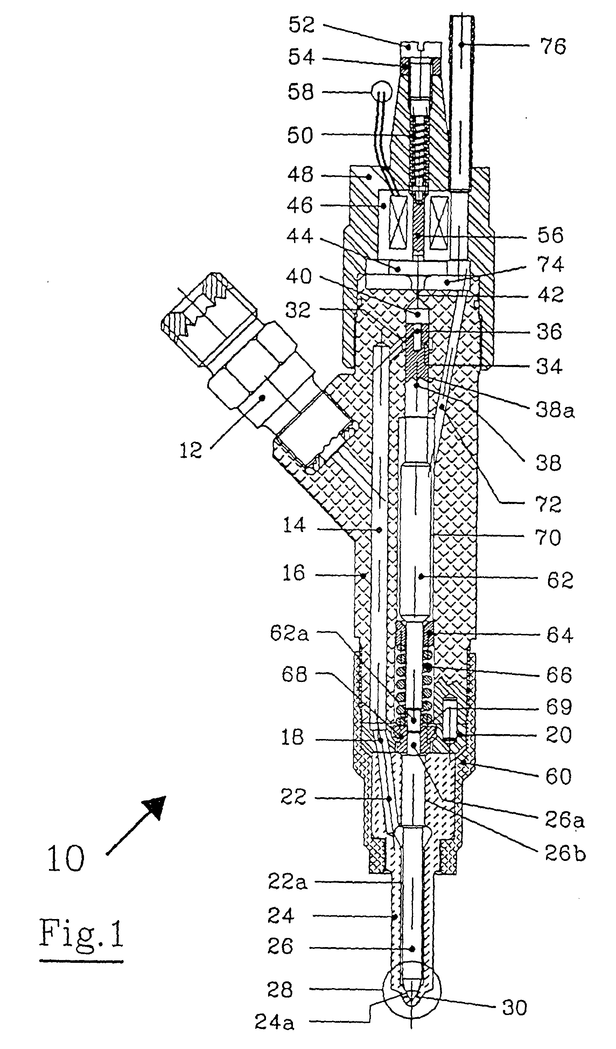

Zurückkommend auf Figur 1, welche eine Schnittzeichnung eines Brennstoffeinspritzventils 10, gemäss der vorliegenden Erfindung zeigt, gelangt der unter Druck stehende Brennstoff über einen Zufuhrstutzen 12 in eine Längsbohrung 14, welche im Ventilgehäuse 16 angebracht ist. Die Bohrung 14 erstreckt sich nach unten bis zu einer Zwischenplatte 20 und mündet in eine in der Zwischenplatte 20 angefertigten Bohrung 18. Die Bohrung 18 mündet in eine Bohrung 22, welche mit einer Ringbohrung 22a verbunden ist, die sich in der Düsennspitze 24 befindet. Die Ringbohrung 22a erstreckt sich in der Düsenspitze 24 bis zum Sitz 24a der Zerstäuberdüse 28, welcher sich zwischen der Düsenspitze 24 und der Spitze der Düsennadel 26 befindet.

Die Zerstäuberdüse 28 ist als sogenannte Sitzlochdüse ausgeführt. In einer derartigen Anordnung der Zerstäuberdüse 28 münden die Einspritzbohrungen 30 an der Innenseite direkt in den Sitz 24a, welcher von der Düsennadelspitze geschlossen wird, wenn keine Einspritzung stattfinden soll. Diese Anordnung weist den spezifischen Vorteil auf, dass unter Voraussetzung eines ausreichenden Brennstoffdruckes in der Ringbohrung 22a, die Zerstäuberdüse 28 bereits bei sehr geringem Hub der Düsennadel 26 eine gute Zerstäubung im Verbrennungsraum der dazugehörigen Verbrennungskraftmaschine (nicht gezeigt) erzeugt. Dies wirkt sich, wie oben erwähnt, günstig auf das Betriebsverhalten des Motors aus.

In Figur 1 wird die Sitzlochdüse als Beispiel einer Zerstäuberdüse 28 gezeigt, welche bereits bei sehr geringem Hub der Düsennadel 26 eine gute Brennstoffzerstäubung aufweist. Weitere Anordungen der Zerstäuberdüse 28 sind im Zusammenhang mit der vorliegenden Erfindung verwendbar. Um die Vorteile der vorliegenden Erfindung optimal auszunützen, ist es jedoch zweckmässig, dass Zerstäuberdüsen verwendet werden, die bereits bei sehr geringem Hub der Düsennadel eine gute Umsetzung der Druckenergie zur Erzeugung kleiner, fein verteilter Brennstofftröpfchen in den Brennraum des Motors gewährleisten.

Nach oben erstreckt sich die Bohrung 14 bis zu einer Ringnute 32, welche mittels der Drosselbohrung 34 und einer Längsbohrung 36, beide im Nadelkolben 38 angefertigt, mit dem Steuerraum 40 verbunden ist. Eine zweite Drosselbohrung 42 mündet einerseits in den Steuerraum 40. Auf der andern Seite wird die Drosselbohrung 42 von einer elektromagnetisch betätigbaren Pilotnadel 44 geschlossen gehalten. Die Pilotnadel 44 kann mittels dem Elektromagnet 46 von der Auslassseite der Drosselbohrung 42 wegbewegt werden.

Der Magnet 46 wird mit einer Mutter 48 an das Ventilgehäuse 16 verschraubt. Ferner sind in Figur 1 eine Steuerfeder 50, eine Steuerfederschraube 52 und eine Steuerfederhülse 54 ersichtlich. Der Schaft 56 der Pilotnadel 44 wird auf der Längsachse des Einspritzventils 10 im Innern des Magnets 46 geführt. Die Rückstellkraft der Steuerfeder 50 wirkt auf das obere Ende des Schaftes 56 der Pilotnadel 44 ein. Diese Kraft kann durch Wahl der Dicke der Federhülse 54 auf den gewünschten Wert eingestellt werden. Der Elektromagnet 46 wird über die elektrischen Anschlusskabel 58 mit elektrischen Stromimpulsen einer vorbestimmten Dauer versorgt.

Die Düsenspitze 24 wird mittels einer Ueberwurfmutter 60 an das Ventilgehäuse 16, zusammen mit der Zwischenplatte 20, auf dichte Weise verschraubt. Die Düsennadel 26 weist am oberen Ende eine dünnere Verlängerung 26a auf, auf dessen Ende die untere Verlängerung 62a des Nadelstempels 62 drückt. Der Nadelstempel 62 weist an seinem oberen Ende besagten Nadelkolben 38 auf und ist als integrales Teil mit diesem Nadelkolben 38 verbunden.

Der Nadelkolben 38 weist zusammen mit dem Ventilgehäuse 16 eine Führung 38a mit einer eng tolerierten Gleitpassung auf. Das Spiel dieser Gleitpassung beträgt typischerweise 2 - 4 Mikrometer. Die Düsennadel 26 weist zusammen mit der Düsenspitze 24 ebenfalls eine Führung mit enger Gleitpassung 26b auf. Das Spiel dieser engen Führung beträgt typischerweise auch 2 - 4 Mikrometer. Zwischen diesen beiden Führungen 26b und 38a befindet sich ein Raum 70, in welchem ein wesentlich tieferer Druck herrscht als in den vorhin erläuterten Brennstoffdurchgängen. Dieser Raum 70 ist über eine Bohrung 72 im Ventilgehäuse 16 mit einem weiteren Raum 74, in dem sich die Pilotnadel 44 befindet, verbunden. Leckbrennstoff, welcher vom Steuerraum 40 über die Führung 38a und von der Rinabohrung 22a über die Führung 26b in den Raum 70 gelangt, wird durch die Bohrung 72 in den Raum 74 evakuiert. Vom Raum 74 fliesst dieser Brennstoff, zusammen mit jenem Brennstoff, der von der Drosselbohrung 42 während jeder Einspritzung in den Raum 74 entlastet wird, über einen Abflussnippel 76 zurück zum Brennstofftank (nicht gezeigt).

Ferner sind im unteren Teil des Ventilgehäuses 16 eine Nadelfederscheibe 64, eine Nadelfeder 66 und ein Hubanschlagelement 68 ersichtlich. Durch Wahl der Dicke der Nadelfederscheibe 64 kann die Vorspannkraft der Nadelfeder 66 auf einen gewünschten Wert gebracht werden.

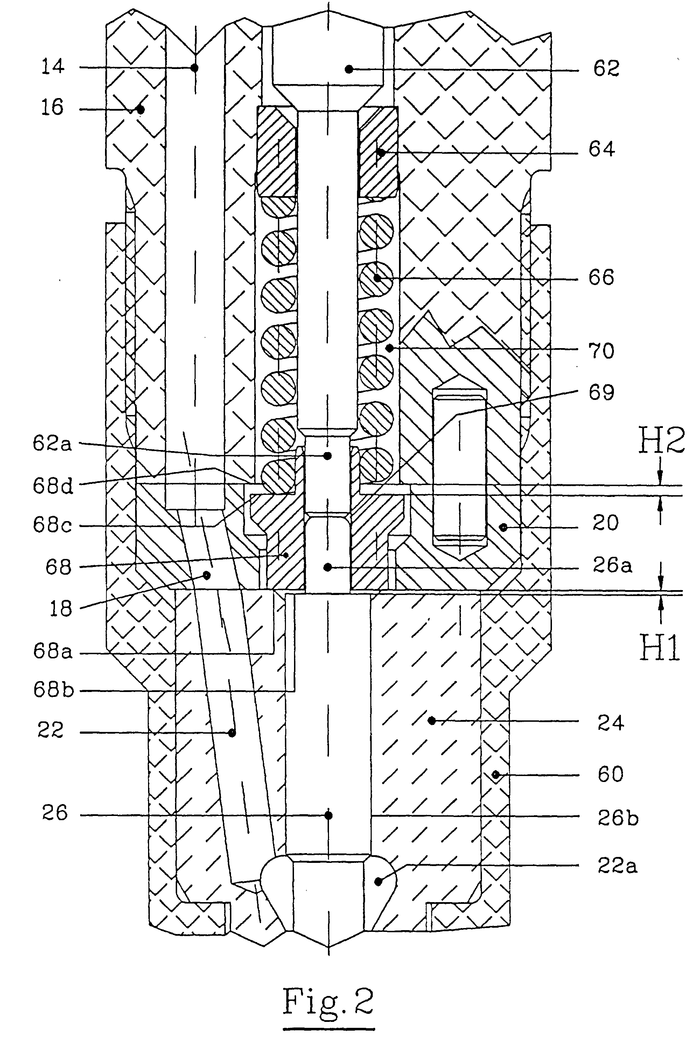

Die eben beschriebenen Elemente sowie weitere schon früher beschriebene Elemente des Brennstoffeinspritzventils 10 werden in der Figur 2 ebenfalls gezeigt. Figur 2 ist ein vergrösserter, partieller Ausschnitt von Figur 1, der die spezifischen Merkmale zur Realisation des gewünschten Hubverlaufes während der Einspritzung, gemäss der vorliegenden Erfindung, detailliert zeigt.

Wenn keine Einspritzung stattfindet, d.h. wie in den Figuren 1 und 2 gezeigt, im geschlossenen Zustand der Düsennadel 26, ruht das Hubanschlagelement 68 auf einer Anschlagfläche 68a. Zwischen dieser ebenen, unteren Anschlagfläche 68a des Hubanschlagelementes 68 und der oberen, ebenen Fläche 68b der Düsennadel 26 ist ein erster freier Weg H1 vorhanden (vgl. Figur 2).

Der Nadelstempel 62 drückt mit seiner Verlängerung 62a, gegeben durch den Druck im Steuerraum 40, auf die Verlängerung 26a der Düsennadel 26 und hält diese somit sicher in ihrer geschlossenen Lage auf dem Ventilsitz 24a. Die Verlängerung 62a könnte sich auch bis zur oberen, ebenen Fläche 68b der Düsennadel 26 erstrecken. Damit würde die Verlängerung 26a der Düsennadel 26 entfallen.

Zwischen der oberen, ebenen Anschlagfläche 68c des Hubanschlagelementes 68 und der dazugehörigen Fläche 68d des Ventilgehäuses 16 ist ein zweiter freier Weg H2 vorhanden.

Die Funktionsweise des Brennstoffeinspritzventils 10 ist nun bei niedrigem (z.B. 200 bar) und mittlerem (z.B. 400 bar) Druckpegel, wie folgt: bei diesem für den Leerlauf und die niedrige Motorlast massgebenden Betriebszustand wird die Düsennadel 26 während dem gesamten Einpritzvorgang nur einen Hub gleich dem Weg H1 zurücklegen. Zu diesem Zweck wird zu einem gewünschten Zeitpunkt der Elektromagnet 46 mit einem Stromimpuls von vorgegebener Dauer erregt. Die Pilotnadel 44 wird entgegen der Kraft der Steuerfeder 50 von der Drosselbohrung 42 wegbewegt. Dadurch, sowie wegen der Drossel 34, sinkt der Druck im Steuerraum 40 rasch ab. Der Druck im Ringraum 22a, der auf den Führungskolben 26b der Düsennadel 26 einwirkt, ist nun in der Lage, die Düsennadel 26 zu öffnen, womit die Einspritzung beginnt.

Die Verlängerungen 26a und 62a bewegen sich dabei im Innern der auf der Längsachse des Brennstoffeinspritzventils 10 angeordneten Längsbohrung 69 des Hubanschlagelementes 68. Das Hubanschlagelement 68 ruht dagegen auf der unteren Anschlagfläche 68a.

Nachdem die Düsennadel 26 den ersten Weg oder Hub H1 zurückgelegt hat, gerät der Anschlag 68b in Kontakt mit dem Anschlag 68a. Die Kraft der Feder 66 ist so gross, dass die hydraulische Druckkraft, welche die Düsennadel 26 weiter öffnen möchte, nicht ausreicht, um diese Federkraft zu überwinden. Die Düsennadel 26 wird also nur den ersten Hub H1 ausführen.

Bei diesem geringen ersten Hub H1 wird die effektive Durchflussfläche der Spritzbohrungen 30 eingeschnürt, wodurch eine geringe Einspritzmenge bei langer Einspritzdauer dem Motorbrennraum (nicht gezeigt) zugeführt wird. Wird der Stromimpuls zum Elektromagnet 46 beendet, wird die Pilotnadel 44 von der Steuerfeder 50 auf die Drosselbohrung 42 zurückgeschoben, und schliesst diese ab. Im Steuerraum 40 baut sich der Druck auf und die hydraulische Druckkraft im Steuerraum 40 wird nun die Düsennadel 26 schliessen und die Einspritzung beenden.

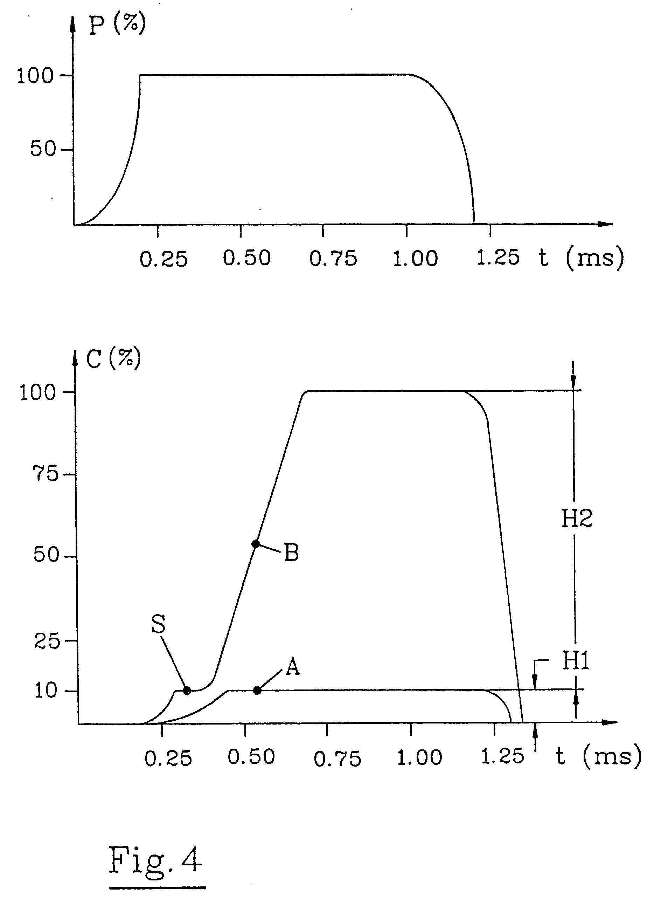

Der Verlauf des ersten Hubes H1 der Düsennadel 26 ist als Ordinate C in Funktion der Zeit t in Figur 4 mit dem Verlauf A dargestellt worden.

Bei hohem Einspritzdruck (z.B. 1000 bar) ist die grundsätzliche Funktionsweise des Brennstoffeinspritzventils 10 ähnlich wie bei niedrigem und mittlerem Einspritzdruck. Es muss hier beachtet werden, dass die hydraulische Druckkraft, welche wegen Druckabsenkung im Steuerraum 40 in Oeffnungsrichtung der Düsennadel 26 wirkt, bei zunehmendem Einspritzdruck ebenfalls zunimmt.

Wird nun bei hohem Einspritzdruck (z.B. 1000 bar) der Elektromagnet 46 mit einem Stromimpuls von vorgegebener Dauer erregt, so bewegt sich wiederum die Pilotnadel 44 von der Drosselbohrung 42 weg, womit der Druck im Steuerraum 40 absinkt. Die Düsennadel 26 wird von der hydraulischen Druckkraft geöffnet und durchläuft rasch den ersten Hub H1. Nach Berührung der ebenen Flächen 68b und 68a ist nun die grössere hydraulische Druckkraft in der Lage, das Hubanschlagelement 68 entgegen der Kraft der Feder 66 zu bewegen, bis die Anschlagfläche 68c die Fläche 68d des Ventilgehäuses 16 berührt, womit der zweite, grössere Hub H2 zusätzlich zum ersten Hub H1 zurückgelegt wird.

Wird der Stromimpuls zum Elektromagnet 46 beendet und folglich, nach dem Schliessen der Drosselbohrung 42 durch die Pilotnadel 44, der Druck im Steuerraum 40 erneut aufgebaut, so wird die Druckkraft im Steuerraum 40, zusammen mit der Federkraft von Feder 66, die Düsennadel 26 rasch schliessen können. Damit wird die Einspritzung rasch unterbrochen, was sich wiederum günstig auf die motorischen Betriebswerte auswirkt.

Der somit beschriebene Verlauf der Düsennadelbewegung während der Einspritzung wird in Figur 4 mit dem Verlauf B dargestellt.

In Figur 4 wird im oberen Diagramm der zeitliche Verlauf des Pilotnadelhubes P nach Erregung des Elektromagnets 46 gezeigt. Die Pilotnadel 44 durchläuft rasch ihren Hub bis zum Anschlag auf der Seite des Elektromagnets und bleibt dann offen, bis eine Zeit von ungefähr einer Millisekunde verstrichen ist. Zu diesem Zeitpunkt wird der Stromimpuls (nicht gezeigt) unterbrochen, und die Pilotnadel 44 wird von der Steuerfeder 50 rasch auf ihren Sitz am Ausgang der Drosselbohrung 42 zurückgeschoben.

Im unteren Diagramm von Figur 4 werden die Verläufe A und B der Düsennadelbewegung, wie weiter oben beschrieben, gezeigt. Beim Verlauf A durchläuft die Düsennadel 26 den ersten Hub H1, der in diesem Diagramm 10% des maximalen Düsennadelhubes entspricht, welcher sich durch Addition der beiden Hübe H1 + H2 ergibt. Dieser Wert von 10% ist ein Richtwert. Je nach der spezifischen motorischen Anwendung kann der erste Hub H1 im Vergleich zum zweiten Hub H2 unterschiedlich gross sein.

Der Verlauf B weist nach dem Durchlaufen des ersten Hubes H1 eine Stufe S auf. Diese Stufe ergibt sich aus der Tatsache, dass die Düsennadel 26 beim Berühren der Anschlagfläche 68b mit der Anschlagfläche 68a zunächst abgebremst wird. Anschliessend muss die Düsennadel 26 zusammen mit dem Stempel 62, dem Anschlagstück 68 und dem unteren Teil der Feder 66 erneut beschleunigt werden.

Diese Stufe S ist in bezug auf die Verbrennung im Motor nicht von Nachteil. Im Gegenteil, sie kann bei gewissen Anwendungen zu einer Verbesserung der Verbrennung und der dazugehörigen Lärm- und Abgasemissionen des Motors führen. Je nachdem, wie gross die Massen der Düsennadel 26 und des Nadelstempels 62, sowie des Hubanschlagelementes 68 sind, und je nachdem wie rasch und wie gross die Druckabsenkung im Steuerraum 40 stattfindet, wird die eben erwähnte Stufe S mehr oder minder ausgeprägt sein. In gewissen Fällen kann diese Stufe S sehr kurz sein, so dass sich der Uebergang vom ersten Hub H1 in den zweiten Hub H2 lediglich als ein Knick in der Oeffnungsbewegung der Düsennadel 26 bemerkbar macht. Je nach dem Betriebsdruck des Brennstoffeinspritzventils 10 ist die Steigung oder Oeffnungsgeschwindigkeit des zweiten Hubes H2 gleich Null (= Verlauf A), gleich einem Verlauf zwischen A und B oder gleich einem Verlauf wie bei B (siehe Figur 4).

Nach der besagten Stufe bewegt sich die Düsennadel 26 zusammen mit dem Stempel 62, dem Anschlagstück 68 und dem unteren Teil der Feder 66 weiter und durchläuft den zweiten Hub H2 bis zum Erreichen des zweiten, definitiven Hubanschlages 68d des Ventilgehäuses 16. Der somit insgesamt zurückgelegte Hub der Düsennadel 26 entspricht der Summe der beiden Teilhübe H1 + H2.

Ein weiterer Vorteil der vorliegenden Erfindung ist, zusätzlich zum Erzielen der Verläufe A bei niedrigem und B beim höchstem Betriebsdruck des Brennstoffeinspritzventils 10 die Tatsache, dass die zwischen A und B bei unterschiedlichen Betriebsdrücken liegenden Verläufe der Düsennadel-Oeffnungsbewegung des zweiten Hubes H2 wesentlich flexibler und exakter realisiert werden können, als bei den bereits bekannten Brennstoffeinspritzventilen dieser Art (wie zum Beispiel jene der EP-A-0 228 578 oder der EP-A-0 262 539).

Bei der vorliegenden Erfindung kann je nach Betriebsdruck die Oeffnungsgeschwindigkeit des zweiten Hubes H2 der Düsennadel 26 jeden beliebigen Wert zwischen den Verläufen A oder B annehmen. Dies ist der Fall, da die Düsennadel 26 bereits bei niedrigem Betriebsdruck (z.B. 200 bar) den ersten Hub H1 ausgeführt hat und der Brennstoffdruck die Sitzfläche 24a, und damit die Spitze der Düsennadel 26 beaufschlägt. In diesem Zustand sind die hydraulischen Druckkräfte stabil, welche von der Seite der Düsenspitze 24 auf die Düsennadel 26 und von der Seite des Steuerraumes 40 auf den Stempel 62 einwirken. Es ist deshalb möglich, jede beliebige Oeffnungsgeschwindigkeit des zweiten Hubes H2 der Düsennadel 26 stabil und reproduzierbar zu erzielen.

Bei den bereits bekannten Lösungen wo ohne dazwischenliegenden Hubanschlag nur ein Hub zurückgelegt wird, muss der Druck im Steuerraum bei bereits recht hohem Betriebsdruck des Brennstoffeinspritzventils stark abgesenkt werden, um die Kraft der Schliessfeder und die fehlende Druckkraft des noch geschlossenen Ventils auszugleichen. Oeffnet nun die Düsennadel und wird die hydraulische Sitzkraft unter der Düsenspitze wirksam, so durchläuft die Düsennadel ihren Hub sehr rasch, und eine Steuerung der Oeffnungsgeschwindigkeit ist nicht möglich.

Es ist ferner zu beachten, dass der Brennstoffdruck, bei welchem die Düsennadel 26 in der Lage ist, das Hubanschlagelement 68 um den zweiten Hub H2 zu bewegen, je nach der spezifischen Anwendung unterschiedlich hoch sein kann (z.B. 200, 300, 400 oder 500 bar). Dies wird durch die spezifische Abstimmung der Steuerelemente (z.B. der Kraft der Feder 66) erzielt.

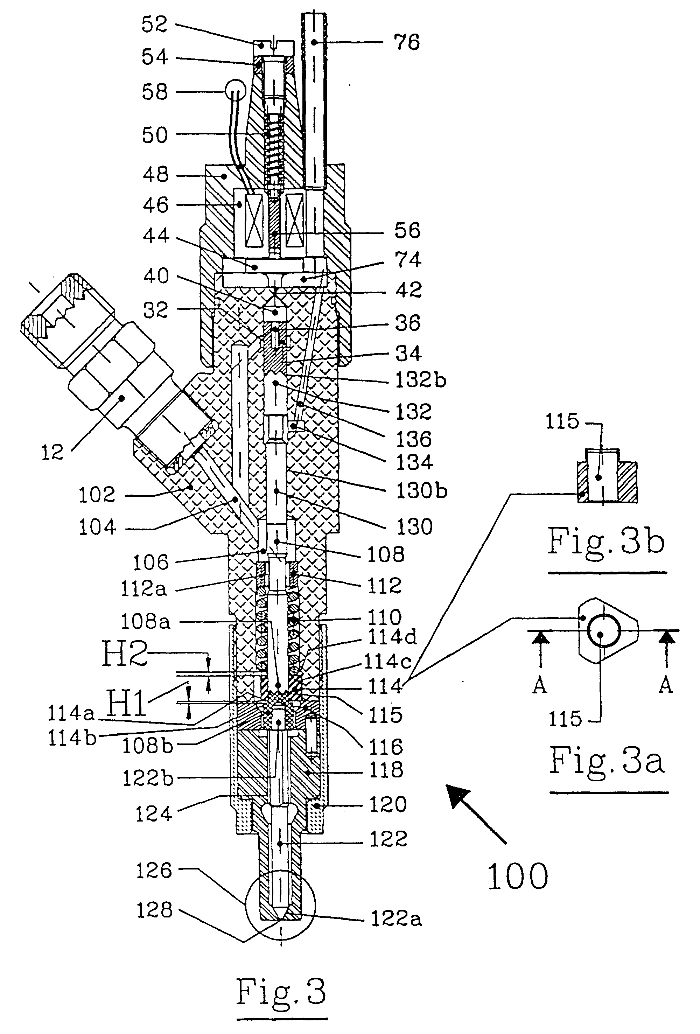

Figur 3 zeigt eine axiale Schnittzeichnung einer zweiten Ausführung eines Brennstoffeinspritzventils 100, gemäss der vorliegenden Erfindung. Die Elemente der Brennstoffeinspritzventile 10 und 100, die gleich sind, wurden mit den gleichen Zahlen numeriert.

Der unter Druck stehende Brennstoff gelangt über den Zufuhrstutzen 12 und eine Bohrung 104 ins Ventilgehäuse 102.

Die Bohrung 104 ist mit einer auf der Längsachse des Brennstoffeinspritzventils 100 angebrachten Bohrung 106 verbunden. In dieser Bohrung 106 befinden sich ein Zwischenstück des Nadelstempels 108, eine Feder 110, eine Federscheibe 112 und ein Hubanschlagelement 114.

Eine Zwischenplatte 116 befindet sich zwischen dem unteren Ende des Ventilgehäuses 102 und der Düsenspitze 118. Die Düsenspitze 118 und die Zwischenplatte 116 werden mittels einer Ueberwurfmutter 120 auf dichte Weise an das Ventilgehäuse 102 verschraubt. Die Düsennadel 122 wird in der Düsenspitze 118 mittels einer Düsennadelführung 124 geführt. Die Düsenspitze 118 und die Düsennadel 122 weisen eine Zerstäuberdüse 126 mit einem gemeinsamen Ventilsitz 122a und einer einzigen Einspritzbohrung 128 auf. Auch diese Anordnung der Zerstäuberdüse 126 ermöglicht eine optimale Ausnützung der Eigenschaften der vorliegenden Erfindung, wie die Zerstäuberdüse des Brennstoffeinspritzventils 10.

Wie in Figur 3 gezeigt, wird der untere Teil 108b des Nadelstempels 108 mit der Verlängerung 122b der Düsennadel 122 mittels eines Presssitzes verbunden. Im Unterschied zum Brennstoffeinspritzventil 10 ist hier eine feste mechanische Verbindung zwischen dem Nadelstempel 108 und der Düsennadel 122 notwendig, da sonst die Düsennadel 122 nicht öffnen würde. Eine alternative Ausführung wäre die, dass beide Teile miteinander verschweisst oder hartgelötet würden oder, dass man sowohl die Düsennadel 122 als auch den Nadelstempel 108 aus einem Werkstück fertigt.

In einer weiteren, nicht näher gezeigten, alternativen Variante, könnte die Platte 116 weggelassen werden und das Ventilgehäuse 102 bis zur Düsenspitze 118 ausgeführt werden.

Die Ausführung des Brennstoffeinspritzventils 100 mit dem Raum 106, welcher unter hohem Druck steht, weist gegenüber dem Brennstoffeinspritzventil 10, gemäss den Figuren 1 und 2, den Vorteil auf, dass der untere Teil des Brennstoffeinspritzventils 100 wesentlich dünner gestaltet werden kann als es beim Brennstoffeinspritzventil 10 möglich ist, da keine Brennstoffzufuhrbohrung 14 seitlich zur Brennstoffeinspritzventillängsachse vorhanden sein muss.

Beim Brenstoffeinspritzventil 100 werden sämtliche Elemente im Innern der Bohrung 106 sowie im Innern der Düsenspitze 118 und der Platte 116 so ausgeführt, dass eine hydraulisch widerstandslose Verbindung zwischen dem Ende der Bohrung 104 und der Zerstäuberdüse 126 besteht. Dies wird realisiert mittels einem Durchgang 112a zwischen der Federscheibe 112 und dem Nadelstempel 108 sowie mit mehreren (hier je drei) Anschliffen, welche am Umfang des Hubanschlagelementes 114 und der Düsennadelführung 124 angebracht sind. Zur besseren Illustration der Ausführung dieser Anschliffe wird die Ansicht von oben des Hubanschlagelementes 114 in Figur 3a gezeigt. Ferner wird in Figur 3b ein Schnitt A-A des Hubanschlagelementes 114, gemäss Figur 3a (gleich wie im Brennstoffeinspritzventil 100) vergrössert dargestellt. Die hydraulische Durchflussfläche des Durchgangs 112a und der Anschliffe ist wesentlich grösser als die Durchflussfläche der Einspritzbohrung 128. Weitere, alternative Ausführungen sind ebenfalls realisierbar.

Der Stempel 108 weist an seinem oberen Ende einen integralen Stempelkolben 130 mit einer engen Gleitpassung 130b zusammen mit dem Ventilgehäuse 102 auf. Ferner ist zu beachten, dass Düsennadel 122, Stempel 108, Nadelhubanschlag 114, Feder 110 und Federscheibe 112 von der Unterseite in das Brennstoffeinspritzventil 100 eingebaut werden können. Dies ist eine recht einfache Anordnung.

Ein zweiter Nadelkolben 132 wird im Innern des Ventilgehäuses 102 mit einer engen Gleitpassung 132b geführt. Der Kolben 132 drückt nun auf das obere Ende des Stempelkolbens 130. Der Durchmesser des zweiten Nadelkolbens 132 kann wahlweise gleich gross sein wie der Durchmesser des Stempelkolbens 130 oder, wie in Figur 3 gezeigt wird, leicht grösser sein. Diese Tatsache kann beim Brennstoffeinspritzventil 10 durch Wahl der Durchmesser der Kolben 26b und 38 ebenfalls berücksichtigt werden.

Zwischen dem Kolben 132 und dem Kolben 130 wird ein Raum 134 gebildet, der einen geringen Druckpegel aufweist. Eine Entlastungsbohrung 136 verbindet diesen Raum 134 mit dem Raum 74. Die Bedeutung dieses Raumes 134 und dieser Bohrung 136 ist dieselbe wie jene des Raumes 70 und der Bohrung 72 des Brennstoffeinspritzventils 10.

Die Funktionsweise des Brennstoffeinspritzventils 100 ist sehr ähnlich wie jene des Brennstoffeinspritzventils 10. Es muss beachtet werden, dass das Ende der Düsennadelführung 124 genau mit dem oberen Ende der Düsenspitze 118 bei der Kontaktfläche mit der Zwischenplatte 116 übereinstimmt. Der untere Teil 108b des Nadelstempels 108 ist nun etwas kürzer als die Zwischenplatte 116 und zwar genau um den Betrag des ersten Hubes H1.

Bei niedrigem (z.B. 200 bar) und mittlerem (z.B. 400 bar) Druckpegel werden sich also die Düsennadel 122 und der Nadelstempel 108 sowie der Kolben 132 nur um den ersten Hub H1 bewegen, solange bis die Anschlagfläche 114b mit der Anschlagfläche 114a des Anschlagstückes 114 in Kontakt kommt. Damit wird bei niedrigem bis mittlerem Einsspritzdruckpegel nur der erste Hub H1 zurückgelegt, da die hydraulische Oeffnungskraft oder Steuerkraft nicht ausreicht, um die Kraft der Feder 110 zu überwinden.

Bei hohem Druckpegel (z.B. 1000 bar) im Brennstoffeinspritzventil 100 wird die Düsennadel 122 samt Stempel 108, das Anschlagstück 114 weiter bewegen, bis die Anschlagfläche 114c des Anschlagstückes 114 die dazugehörige Fläche 114d im Gehäuse 102 berühren wird, womit der zweite Hub H2 zurückgelegt wird.

Bei den Konstruktionen der Brennstoffeinspritzventile 10 und 100 wird die Bewegung des ersten Hubes H1 der Düsennadeln 26 und 122 nur von hydraulischen Kräften gesteuert. Die hydraulische Druckkraft im Steuerraum 40 sorgt dafür, dass die Düsennadel 26 oder 122 den Sitz 24a oder 122a auf dichte Weise abschliesst, wenn keine Einspritzung stattfinden soll. Dies ist während dem Motorbetrieb immer der Fall. Nach dem Abstellen des Motors, sinkt der hydraulische Druck in den Brennstoffeinspritzventilen nach einiger Zeit auf Umgebungsdruck ab (= ca. 1 bar).

Vor dem erneuten Aufstarten des Motors muss ein geringer hydraulischer Druck von ca. 50 bar in den Einspritzventilen erzeugt werden, da sonst der Kompressionsdruck im (oder in den) Motorzylinder(n) die Düsennadel(n) 26 oder 122 um den ersten Hub H1 öffnen könnte. Wegen der möglichen Verunreinigung des Sitzes 24a oder 122a würde unter Umständen die geforderte Dichtheit beeinträchtigt.

Ist bei bestimmten Anwendungen die Erzeugung dieses Mindestdruckes vor dem Motorstart nicht möglich, so ist es vorteilhaft, die Düsennadel 26 oder 122 der Brennstoffeinspritzventile 10 oder 100 mechanisch zuzuhalten. Dies könnte beispielsweise mit einer auf die Düsennadel 26 oder 122 einwirkenden schwachen Feder geschehen, welche eine Schliesskraft entsprechend einem Druck von ca. 50 bar auf die Fläche des Sitzes 24a oder 122a erzeugt. Eine solche Feder ist ca. 3 bis 10 mal schwächer als die Hubanschlagfeder 66 oder 110 jedes Brennstoffeinspritzventils 10 oder 100 und beeinträchtigt deshalb die Funktion der Brennstoffeinspritzventile 10 und 100 der vorliegenden Erfindung nicht.

## Patentansprüche

1. Brennstoffeinspritzventil zur intermittierenden Brennstoffzufuhr in den Brennraum einer Verbrennungskraftmaschine, mit
einem Gehäuse (16; 102),
einem mindestens eine Einspritzöffnung (30; 128) aufweisenden Ventilsitz (24a; 122a),
einem im Gehäuse (16; 102) in dessen Axialrichtung verschiebbar eingebauten und mit dem Ventilsitz (24a; 122a) zusammenwirkenden, länglichen Einspritzventilglied (26, 62, 38; 122, 108, 130, 132) zum Verschliessen der Einspritzöffnung (30; 128), wobei das Einspritzventilglied (26, 62, 38; 122, 108, 130, 132) vorübergehend in axialer Richtung weg vom Ventilsitz (24a; 122a) bewegbar ist, um die Einspritzöffnung (30; 128) zu öffnen,
einem im Gehäuse (16; 102) vorgesehenen Steuerraum (40), der einerseits mit einer den unter Druck stehenden Brennstoff beinhaltenden Hochdruckzone (14; 104) verbunden ist, und der anderseits über eine mittels eines elektromagnetisch betätigbaren Pilotventils (44) verschliessbare Steueröffnung (42) mit einer Niederdruckzone (74) vorübergehend verbindbar ist, wobei der Brennstoffdruck im Steuerraum (40) auf das Einspritzventilglied (26, 62, 38; 122, 108, 130, 132) einwirkt und letzteres an den Ventilsitz (24a; 122a) andrückt, und der Brennstoffdruck im Steuerraum (40) durch Betätigung des elektromagnetisch betätigbaren Pilotventils (44) rasch abgesenkt und rasch wieder aufgebaut wird, um die axiale Öffnungs- und Schliessbewegung des Einspritzventilgliedes (26, 62, 38; 122, 108, 130, 132) zuzulassen,
einer im Einspritzventilglied (26, 62, 38; 122, 108, 130, 132) angeordneten und sich in dessen Längsachse erstreckenden Bohrung (36), die mit dem Steuerraum (40) verbunden ist, und
einer ebenfalls im Einspritzventilglied (26, 62, 38; 122, 108, 130, 132) angeordneten Drosselbohrung (34), die in die Bohrung (36) mündet, mit der Hochdruckzone (14; 104) verbunden ist, und einen kleineren Durchmesser aufweist als die Bohrung (36),
**dadurch gekennzeichnet, dass**
die im Einspritzventilglied (26, 62, 38; 122, 108, 130, 132) angeordnete und sich in dessen Längsachse erstreckende Bohrung (36) mit gleichbleibendem Durchmesser direkt in den Steuerraum (40) mündet und im Einspritzventilglied (26, 62, 38; 122, 108, 130, 132) nur eine die Hochdruckzone (14; 104) mit der Bohrung (36) verbindende Drosselbohrung (34) vorgesehen ist.

2. Brennstoffeinspritzventil nach Anspruch 1, **gekennzeichnet durch** eine mit der Hochdruckzone (14; 104) verbundene Ringnute (32), wobei die Drosselbohrung (34) die Ringnute (32) mit der Bohrung (36) verbindet.

3. Brennstoffeinspritzventil nach Anspruch 1 oder 2, **dadurch gekennzeichnet, dass** das Einspritzventilglied (26, 62, 38; 122, 108, 130, 132) mindestens aus einem ersten Teilstück (26; 108, 122) und einem zweiten Teilstück (62; 132) besteht, wobei ein Ende des ersten Teilstückes (26; 108, 122) mit dem Ventilsitz (24a, 122a) zusammenwirkt.

4. Brennstoffeinspritzventil nach Anspruch 3, **dadurch gekennzeichnet, dass** sich das zweite Teilstück (62) des Einspritzventilgliedes (26, 62, 38) in einer Längsbohrung (70) des Gehäuses (16) befindet, in welcher ein geringer Druckpegel vorhanden ist.

5. Brennstoffeinspritzventil nach Anspruch 3 oder 4, **dadurch gekennzeichnet, dass** sich das erste Teilstück (108, 122) des Einspritzventilgliedes (122, 108, 130, 132) in einer Längsbohrung (106) im Gehäuse (102) befindet, in welcher ein Druck gleich dem Einspritzdruck herrscht.

6. Brennstoffeinspritzventil nach einem der Ansprüche 3-5, **dadurch gekennzeichnet, dass** eine Verlängerung (62a) des zweiten Teilstückes (62) des Einspritzventilgliedes (26, 62, 38) mit dem ersten Teilstück (26) des Einspritzventilgliedes (26, 62, 38) in Berührung steht.

7. Brennstoffeinspritzventil nach einem der Ansprüche 3-6 **dadurch gekennzeichnet, dass** das erste Teilstück (108, 122) des Einspritzventilgliedes (122, 108, 130, 132) aus zwei dauernd miteinander verbundenen Teilen (108, 122) besteht.

8. Brennstoffeinspritzventil nach einem der Ansprüche 3-7, **dadurch gekennzeichnet, dass** das Einspritzventilglied (122, 108, 130, 132) ein weiteres, drittes Teilstück (132) aufweist, welches in einer ersten Führung (132b) geführt ist und in welchem die Bohrung (36) und die Drosselbohrung (34) angeordnet sind, und weiter ein viertes Teilstück (130) aufweist, welches in einer weiteren, zweiten Führung (130b) geführt ist, wobei zwischen diesen beiden Führungen (130b und 132b) ein im wesentlichen druckloser Raum (134) vorhanden ist, und das dritte Teilstück (132) vom Druck im Steuerraum (40) gegen das vierte Teilstück (130) gedrückt wird.

9. Brennstoffeinspritzventil nach Anspruch 1, **dadurch gekennzeichnet, dass** das Einspritzventilglied (26, 62, 38; 122, 108, 130, 132) ein erstes, vom Druck im Steuerraum (40) beaufschlagtes Kolbenelement (38; 132) aufweist, dessen Führungsdurchmesser (38a; 132b) grösser ist, als der Führungsdurchmesser (26b; 130b) eines zweiten Kolbenelementes (26; 130) des Einspritzventilgliedes (26, 62, 38; 122, 108, 130, 132), wobei die Bohrung (36) sowie auch die Drosselbohrung (34) im ersten Kolbenelement (38; 132) angeordnet sind.

10. Brennstoffeinspritzventil nach einem der Ansprüche 2-9, **dadurch gekennzeichnet, dass** die Ringnute (32) im Gehäuse (16; 102) angeordnet ist.

## Claims

1. A fuel injection valve for the intermittent supply of fuel into the combustion chamber of an internal combustion engine, having
a housing (16; 102)
a valve seat (24a; 122a) having at least one injection port (30; 128),
an elongated injection valve member (26, 62, 38; 122, 108, 130, 132), fitted in the housing (16; 102) so that it is displaceable in the axial direction thereof and interacting with the valve seat (24a; 122a), for closing the injection port (30; 128), the injection valve member (26, 62, 38; 122, 108, 130, 132) being temporarily moveable in the axial direction away from the valve seat (24a; 122a) in order to open the injection port (30; 128),
a control chamber (40) provided in the housing (16; 102), which chamber is on the one hand connected to a high-pressure zone (14; 104) containing the pressurized fuel, and on the other hand can be temporarily connected to a low-pressure zone (74) by way of a control port (42), closeable by means of a solenoid pilot valve (44), the fuel pressure in the control chamber (40) acting on the injection valve member (26, 62, 38; 122, 108, 130, 132) and the latter pressing on the valve seat (24a; 122a), and the fuel pressure in the control chamber (40) being rapidly reduced and rapidly built up again by actuation of the solenoid pilot valve (44), in order to permit the axial opening and closing movement of the injection valve member (26, 62, 38; 122, 108, 130, 132),
a bore (36) arranged in the injection valve member (26, 62, 38; 122, 108, 130, 132) and extending in the longitudinal axis thereof, which bore is connected to the control chamber (40), and
a restriction bore (34), likewise arranged in the injection valve member (26, 62, 38; 122, 108, 130, 132), which restriction bore opens into the bore (36), is connected to the high-pressure zone (14; 104), and has a smaller diameter than the bore (36),
**characterized in that**
the constant-diameter bore (36) arranged in the injection valve member (26, 62, 38; 122, 108, 130, 132) and extending in the longitudinal axis thereof opens into the control chamber (40), and that only one restriction bore (34) connecting the high-pressure zone (14; 104) to the bore (36) is provided in the injection valve member (26, 62, 38; 122, 108, 130, 132).

2. The fuel injection valve according to Claim 1, **characterized by** an annular groove (32) connected to the high-pressure zone (14; 104), the restriction bore (34) connecting the annular groove (32) to the bore (36).

3. The fuel injection valve according to Claim 1 or 2, **characterized in that** the injection valve member (26, 62, 38; 122, 108, 130, 132) comprises at least a first section (26; 108, 122) and a second section (62; 132), one end of the first section (26; 108, 122) interacting with the valve seat (24a, 122a).

4. The fuel injection valve according to Claim 3, **characterized in that** the second section (62) of the injection valve member (26, 62, 38) is situated in a longitudinal bore (70) of the housing (16), in which a low pressure level prevails.

5. The fuel injection valve according to Claim 3 or 4, **characterized in that** the first section (108, 122) of the injection valve member (122, 108, 130, 132) is situated in a longitudinal bore (106) in the housing (102), in which a pressure equal to the injection pressure prevails.

6. The fuel injection valve according to one of Claims 3 to 5, **characterized in that** an extension (62a) of the second section (62) of the injection valve member (26, 62, 38) is in contact with the first section (26) of the injection valve member (26, 62, 38).

7. The fuel injection valve according to one of Claims 3 to 6, **characterized in that** the first section (108, 122) of the injection valve member (122, 108, 130, 132) comprises two parts (108, 122) permanently connected to one another.

8. The fuel injection valve according to one of Claims 3 to 7, **characterized in that** the injection valve member (122, 108, 130, 132) has a further third section (132), which is guided in a first guide (132b) and in which the bore (36) and the restriction bore (34) are arranged, and furthermore has a fourth section (130), which is guided in a further, second guide (130b), there being an essentially unpressurized space (134) between the said two guides (130b and 132b), and the third section (132) being pressed against the fourth section (130) by the pressure in the control chamber (40).

9. The fuel injection valve according to Claim 1, **characterized in that** the injection valve member (26, 62, 38; 122, 108, 130, 132) has a first piston element (38; 132) acted upon by the pressure in the control chamber (40), the guide diameter (38a; 132b) of which element is larger than the guide diameter (26b; 130b) of a second piston element (26; 130) of the injection valve member (26, 62, 38; 122, 108, 130, 132), the bore (36) and also the restriction bore (34) being arranged in the first piston element (38; 132).

10. The fuel injection valve according to one of Claims 2 to 9, **characterized in that** the annular groove (32) is arranged in the housing (16; 102).

## Revendications

1. Soupape d'injection de carburant pour l'introduction intermittente de carburant dans la chambre de combustion d'un moteur à combustion interne, avec
un corps (16; 102),
un siège de soupape (24a; 122a) présentant au moins un orifice d'injection (30; 128),
un organe de soupape d'injection allongé (26, 62, 38; 122, 108, 130, 132), monté dans le corps (16; 102), coulissant dans la direction axiale de celui-ci et coopérant avec le siège de soupape (24a; 122a), pour la fermeture de l'orifice d'injection (30; 128), dans laquelle l'organe de soupape d'injection (26, 62, 38; 122, 108, 130, 132) peut être éloigné temporairement en direction axiale du siège de soupape (24a; 122a), pour ouvrir l'orifice d'injection (30; 128),
une chambre de commande (40) prévue dans le corps (16; 102), qui est d'une part raccordée à une zone de haute pression (14; 104) contenant le carburant se trouvant sous pression et qui peut d'autre part être raccordée temporairement à une zone de basse pression (74) par une ouverture de commande (42) pouvant être obturée au moyen d'une soupape pilote (44) à commande électromagnétique, dans laquelle la pression de carburant dans la chambre de commande (40) agit sur l'organe de soupape d'injection (26, 62, 38; 122, 108, 130, 132) et presse ce dernier sur le siège de soupape (24a; 122a), et la pression de carburant dans la chambre de commande (40) est rapidement abaissée et à nouveau rapidement augmentée en actionnant la soupape pilote à commande électromagnétique (44), afin de permettre le mouvement axial d'ouverture et de fermeture de l'organe de soupape d'injection (26, 62, 38; 122, 108, 130, 132),
un alésage (36) disposé dans l'organe de soupape d'injection (26, 62, 38; 122, 108, 130, 132) et s'étendant suivant l'axe longitudinal de celui-ci, qui est raccordé à la chambre de commande (40), et
un orifice d'étranglement (34) disposé également dans l'organe de soupape d'injection (26, 62, 38; 122, 108, 130, 132), qui débouche dans l'alésage (36), qui est raccordé à la zone de haute pression (14; 104) et qui présente un diamètre plus petit que l'alésage (36),
**caractérisée en ce que**
l'alésage (36) de diamètre constant, disposé dans l'organe de soupape d'injection (26, 62, 38; 122, 108, 130, 132) et s'étendant suivant l'axe longitudinal de celui-ci, débouche directement dans la chambre de commande (40) et il n'est prévu dans l'organe de soupape d'injection (26, 62, 38; 122, 108, 130, 132) qu'un seul orifice d'étranglement (34) reliant la zone de haute pression (14; 104) à l'alésage (36).

2. Soupape d'injection de carburant suivant la revendication 1, **caractérisée par** une rainure annulaire (32) reliée à la zone de haute pression (14; 104), l'orifice d'étranglement (34) reliant la rainure annulaire (32) à l'alésage (36).

3. Soupape d'injection de carburant suivant la revendication 1 ou 2, **caractérisée en ce que** l'organe de soupape d'injection (26, 62, 38; 122, 108, 130, 132) se compose au moins d'une première pièce partielle (26; 108, 122) et d'une deuxième pièce partielle (62; 132), une extrémité de la première pièce partielle (26; 108, 122) coopérant avec le siège de soupape (24a, 122a).

4. Soupape d'injection de carburant suivant la revendication 3, **caractérisée en ce que** la deuxième pièce partielle (62) de l'organe de soupape d'injection (26, 62, 38) se trouve dans un alésage longitudinal (70) du corps (16), dans lequel il règne un faible niveau de pression.

5. Soupape d'injection de carburant suivant la revendication 3 ou 4, **caractérisée en ce que** la première pièce partielle (108, 122) de l'organe de soupape d'injection (122, 108, 130, 132) se trouve dans un alésage longitudinal (106) dans le corps (102), dans lequel règne une pression égale à la pression d'injection.

6. Soupape d'injection de carburant suivant l'une quelconque des revendications 3 - 5, **caractérisée en ce qu'**un prolongement (62a) de la deuxième pièce partielle (62) de l'organe de soupape d'injection (26, 62, 38) est en contact avec la première pièce partielle (26) de l'organe de soupape d'injection (26, 62, 38).

7. Soupape d'injection de carburant suivant l'une quelconque des revendications 3 - 6, **caractérisée en ce que** la première pièce partielle (108, 122) de l'organe de soupape d'injection (122, 108, 130, 132) se compose de deux parties (108, 122) assemblées l'une à l'autre de façon durable.

8. Soupape d'injection de carburant suivant l'une quelconque des revendications 3 - 7, **caractérisée en ce que** l'organe de soupape d'injection (122, 108, 130, 132) présente en outre une troisième pièce partielle (132), qui est guidée dans un premier guide (132b) et dans laquelle sont disposés l'alésage (36) et l'orifice d'étranglement (34), et présente en outre une quatrième pièce partielle (130), qui est guidée dans un second guide (130b), une chambre sensiblement sans pression (134) étant présente entre ces deux guides (130b et 132b), et la troisième pièce partielle (132) étant pressée contre la quatrième pièce partielle (130) par la pression dans la chambre de commande (40).

9. Soupape d'injection de carburant suivant la revendication 1, **caractérisée en ce que** l'organe de soupape d'injection (26, 62, 38; 122, 108, 130, 132) présente un premier élément de piston (38; 132) soumis à la pression dans la chambre de commande (40), dont le diamètre de guidage (38a; 132b) est plus grand que le diamètre de guidage (26b; 130b) d'un second élément de piston (26; 130) de l'organe de soupape d'injection (26, 62, 38; 122, 108, 130, 132), l'alésage (36) ainsi que l'orifice d'étranglement (34) étant aussi disposés dans le premier élément de piston (38; 132).

10. Soupape d'injection de carburant suivant l'une quelconque des revendications 2 - 9, **caractérisée en ce que** la rainure annulaire (32) est disposée dans le corps (16; 102).
